# EUROPEAN PATENT SPECIFICATION

(11) **EP 1 251 047 B1**
(45) Date of publication and mention of the grant of the patent: **08.09.2004**
(21) Application number: 02015484.5
(22) Date of filing: 18.01.2000
(51) Int. Cl.: B60R 22/40

(54) **Retractor**
Retraktor
Rétracteur

(30) Priority: 22.01.1999 GB 9901507; 23.12.1999 GB 9930508
(43) Date of publication of application: 23.10.2002
(62) Divisional of application: 00900688.3
(73) Proprietor: KEY SAFETY SYSTEMS, INC., Sterling Heights, Michigan 48314 (US)
(72) Inventor: Blackadder, David, Carlisle, Cumbria CA4 8OG (GB); Smithson, Alan George, Wetheral, Cumbria CA4 8HD (GB); Taylor, John, Penrith, Cumbria CA11 9LW (GB); Harte, Joseph Patrick, Maryport, Cumbria CA15 6RP (GB); Mitchinson, Nigel, Dundar Castle, Cumbria CA5 7LS (GB); Bowman, Paul, Carlisle, Cumbria CA4 8OF (GB)
(74) Representative: Freeman, Jacqueline Carol

(56) References cited:
- WO-A-98/49035
- DE-U- 29 720 818
- US-A- 3 343 763
- PATENT ABSTRACTS OF JAPAN vol. 017, no. 414 (M-1456), 3 August 1993 (1993-08-03) & JP 05 085304 A (MAZDA MOTOR CORP), 6 April 1993 (1993-04-06)

## Description

This application is a divisional application deriving from 00 900 688.3.

The present invention relates to a retractor for a vehicle safety restraint and particularly to a retractor for use in a rear seat and a method of assembling such a retractor.

Retractors for rear seat belts are often mounted on the seat back rest itself since space is at a premium in the rear passenger compartment. For the seat belt to be effective the back rest must be fastened securely to a fixed part of the vehicle which would be the case in normal use. However in some vehicles, such as so-called station-wagons or estate cars and so-called hatchback cars, the rear seat back rest can be unlatched from its fastened upright position and rotated into a horizontal position to increase the luggage capacity of the vehicle. In some models the back rest is split and one part may remain upright to accommodate a seated passenger while the other part is lowered to allow bulky luggage to overflow from the luggage compartment behind the seat back.

In both cases there is a danger that when the seat back rest is returned to the upright position it may not be securely locked. In a crash, the rear passenger will then not be safely restrained because the retractor, attached to the seat back, will move when the seat back moves under the inertial loading caused by the crash.

The rear seat retractor is constructed in a similar manner to a front seat retractor and has both a web sensor and a vehicle sensor. The web sensor locks the retractor against pay-out if the belt webbing is suddenly jerked, as would happen if it were suddenly loaded by the inertia of the user in a crash. This is known technology. The vehicle sensor detects a sudden change of speed of the vehicle and locks the retractor, again in a manner known to those skilled in the art.

The vehicle sensor typically comprises an inertia sensitive ball resting freely in a cup. A sudden deceleration of the vehicle causes the ball to keep moving and to ride up the side of the cup. A pawl resting on the ball is thus deflected upwards and this pawl activates a locking mechanism to lock the retractor spool against rotation and thus against further pay-out of webbing.

The geometry of the ball type vehicle sensor means that it will also be activated if the retractor is tilted. This is used in the known systems described in DE 29 27 159 and GB 2 249 339 as an inherent seat back tilt sensor. If the seat back is not upright then the vehicle sensor locks the retractor against pay-out and it cannot be used.

However this known arrangement will not detect a rear seat back which is in the upright position but is not locked securely into the upright position. In this situation the retractor of the known arrangements could be used to fasten a vehicle occupant who will be unaware that the retractor is free to move and thus that he is not safely restrained.

In the system described in GB 2 286 624, a sensor is located in the seat back latch itself. When this detects that the latch is securely fastened it releases an additional locking device on the retractor to allow the retractor to be used. This is an expensive system requiring an additional locking device to be fitted to the retractor.

DE 29720818 U describes a retractor according to the preamble of claim 1.

The present invention aims to provide an improved safety locking arrangement for a retractor in a rear seat.

According to a first aspect of the present invention there is provided a retractor for a vehicle safety restraint for use in a rear vehicle seat, the retractor comprising: a rotatable spool (2), for storing seat belt webbing, a retractor locking mechanism, for locking the spool (2) against rotation, means (16) connecting a seat latch to the locking mechanism, an override lockout lever (30), a resilient biasing means (15), arranged to bias the lockout lever (14) into an engaging position in which the retractor locking mechanism is engaged, wherein the connecting means (16) is arranged, under the influence of the seat latch, to move the lever (30) between the engaging position in which the locking mechanism engages, and an unengaged position in which the lever (30) is held clear of the locking mechanism and the locking mechanism is disengaged, and the retractor comprising a housing structure (34) wherein the override lockout lever (30), the resilient biasing means (15), and at least part of the connecting means (16) are located in said housing structure (34) to form a module which can be assembled into a mechanism bush part (32) as a complete module.

According to a preferred embodiment the locking mechanism is moved in phase with the locking member, so as to maintain its control of the angular position of the locking member.

Preferably the connecting means comprises a cable, for example a Bowden cable which has one end connected to the seat latch, and the other end connected to a spring biased slider acting on the retractor. When the seat is securely latched the Bowden cable is pulled away from the retractor locking mechanism and thus pulls the slider away from the locking mechanism. When the seat is not securely latched then the Bowden cable remains in the extended state and the slider, under the spring influence, engages and activates the locking mechanism, thus locking the retractor against webbing payout.

In a traditional retractor, the retractor locking mechanism, e.g. the vehicle sensor and retractor locking pawl, is mounted in a so-called lockcup otherwise known as a multi-function piece which is attached to the side of the spool.

The housing structure preferably surrounds an aperture in the bush through which the lever can pivot to engage the retractor locking means to lock the spool. The override lockout components can thus all be assembled from one side of the assembly. They can thus be installed at any stage of the assembly process and can be tested and checked as a module before the mechanism bush is assembled to the retractor, i.e. attached to the frame.

According to a second aspect of the invention there is provided a method of assembling a retractor for a vehicle safety restraint for use in a rear vehicle seat comprising first assembling, all from one side of the retractor, into a housing structure (34), an override lockout lever (30) movable into an engaging position locking the retractor and means connecting the seat latch to the retractor locking mechanism, and subsequently assembling the housing structure (34) to a retractor mechanism bush (32) and subsequently assembling the mechanism bush (32) to a retractor spool (2).

A retractor according to the present invention has advantages over known override lockout systems because there are less parts, leading to cost savings and improved reliability. Also the main locking mechanism is maintained in the correct orientation with respect to the lockbar, inhibiting self engagement of the lockbar in normal use, and thus again improving reliability and also contributing to comfort and reducing noise.

For a better understanding of the present invention, and to show how the same may be carried into effect, reference will now be made to the accompanying drawings, in which:
- Figure 1: shows a retractor in cross sectional view in an illustrative example not falling within the scope of the claims;
- Figure 2: shows an alternative retractor in cross sectional view in an illustrative example not falling within the scope of the claims;
- Figure 3: shows a further alternative retractor in cross sectional view in an illustrative example not falling within the scope of the claims;
- Figure 4: is a different cross sectional view to that shown in Figure 3.
- Figure 5: is an exploded perspective view of part of a retractor illustrating the invention.

Throughout the Figures like reference numerals denote like parts.

A vehicle safety retractor is shown generally at 1 and comprises a rotatable spool 2 with seat belt webbing 3 wound thereon. The spool 2 is rotatable about its longitudinal axis in bushings 4 in sides 5 of a retractor frame 6. On the left hand side (as illustrated) of the frame 6 is fixed a toothed ratchet wheel 7, and a web sensor disc. The web sensor disc is arranged to activate locking of the retractor when the webbing is pulled out suddenly as for example in a vehicle crash. This operates in known manner.

Below this, as shown, is located a vehicle sensor 9, the function of which is to activate locking of the retractor under conditions of sudden acceleration or deceleration of the vehicle, again indicative of a crash and again well known in the art. The vehicle sensor 9 comprises an inertia sensitive ball 10 resting freely in a hollow cup 11. A pivoted hat 12 rests on the ball 10, and is coupled to a locking pawl 13 arranged for engagement, in the locking position, with the ratchet wheel 7 to lock the spool 2 against further webbing payout. When sudden acceleration of the vehicle occurs then the ball 10 is displaced and rolls up a side of the cup 11. This movement lifts the hat 12 and moves the pawl 13 into locking engagement with the ratchet wheel 7.

An additional locking lever 14 is located adjacent the ball 10. It is biased by a spring 15 to the upward position in which it displaces the ball 10 into the retractor locking position. The locking lever 14 is connected to one end of a Bowden cable 16. The other end (not shown) of the Bowden cable 16 is connected to a rear seat latching mechanism (not shown). When the seat is securely latched the Bowden cable 16 is retracted away from the vehicle sensor and pulls the locking lever 14 away from the ball 10. Thus the spool is free to rotate and the retractor operates normally.

However, if the seat is not securely latched then the Bowden cable, under the influence of the spring 15 acting through the lever 14, remains in an extended state, and the lever 14 contacts the ball 10 and displaces it to the position in which the spool becomes locked against further webbing payout.

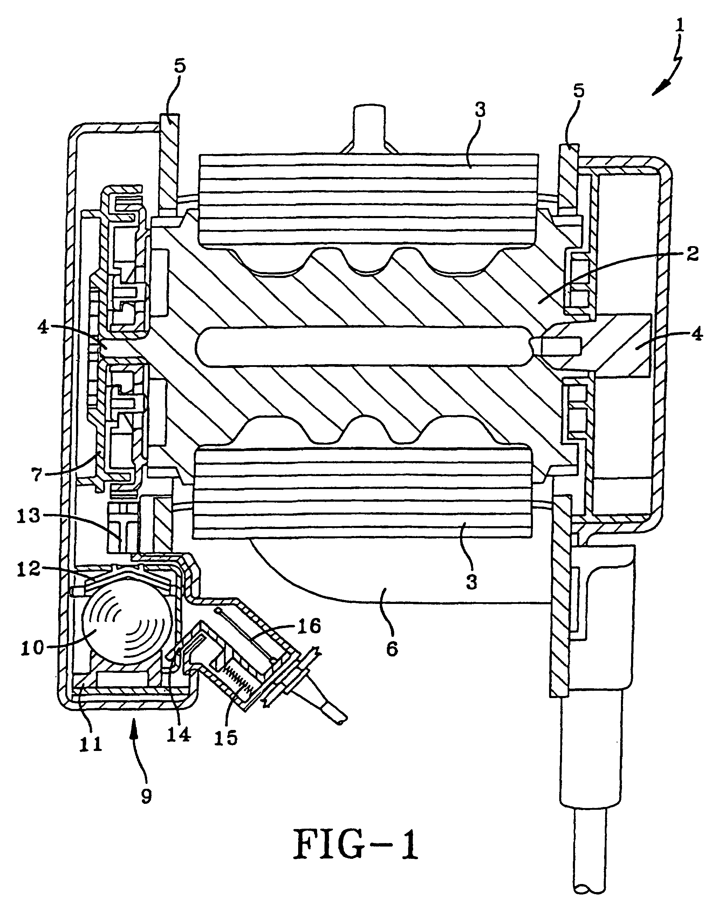

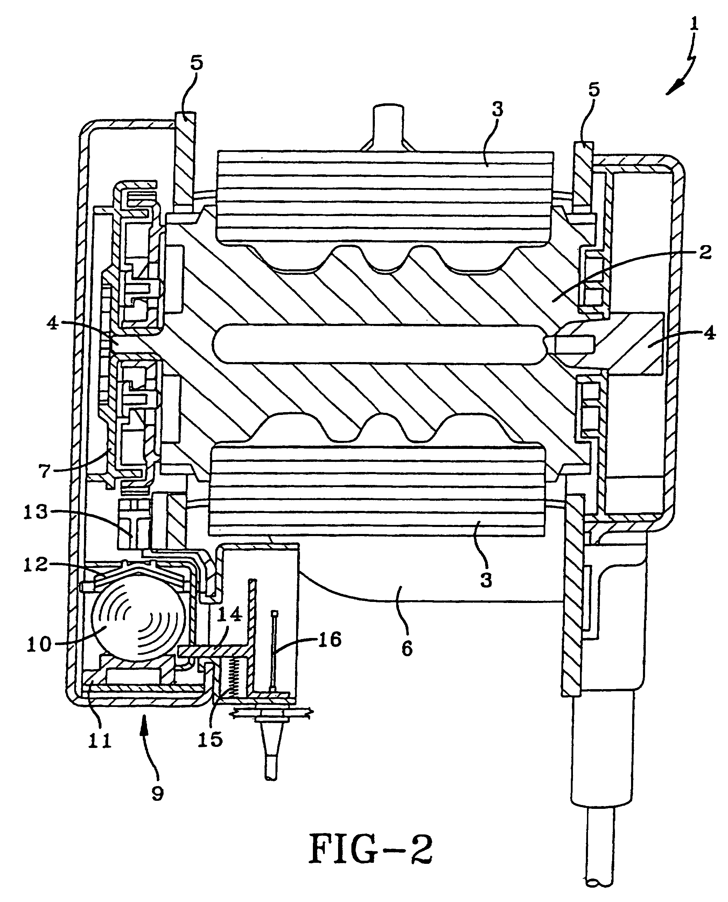

In the illustrative example of Figure 1 the line of action of the locking lever 14 is oriented obliquely to the vehicle sensor, and in Figure 2 it is oriented generally in a vertical plane. Otherwise the illustrative examples of Figures 1 and 2 show identical parts.

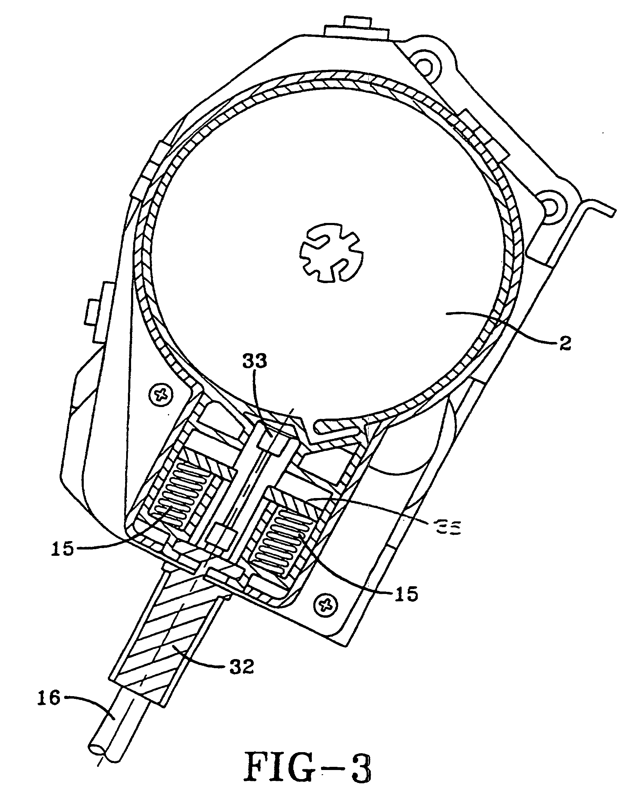

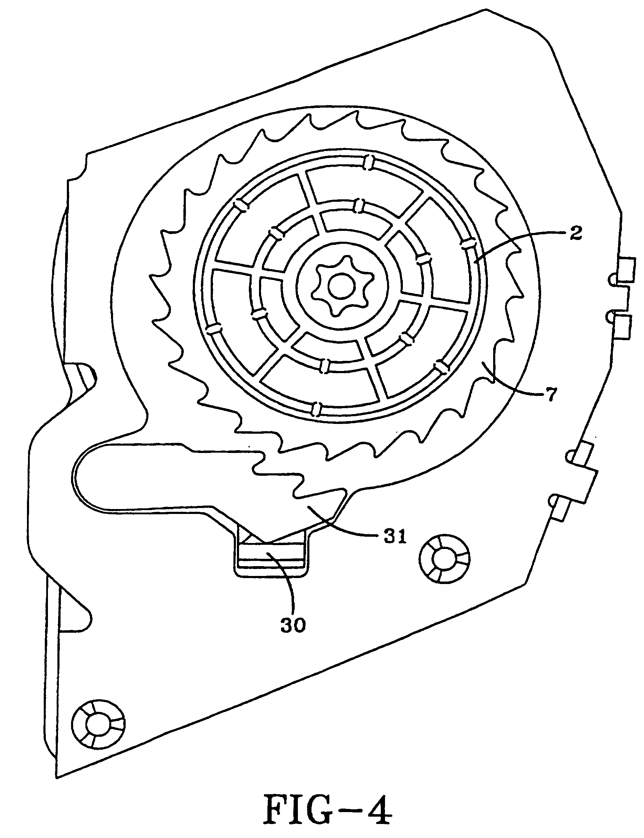

In the illustrative examples of Figures 3 and 4 a different retractor is shown. Here a lockout lever 30 acts directly on a load bearing lockdog 31 which pivots to engage the spool 2 to lock the spool 2 against further payout of webbing.

In this retractor there are two biasing springs 15. The cable 16 is protected by a sheath 32 in the region of the retractor. The cable 16 has an end 33 in auxiliary housing 35 which slides within housing 34. Auxiliary housing 35 is slidingly biased by the springs 15 and it abuts the retractor main locking pawl (or lockdog) 31. The lockdog 31 is pivoted about axis 40 and in its upward position contacts the spool 2 (Figure 4) to lock it against further rotation and further webbing payout. When the seat latch is securely fastened however the cable 16 works against the springs 15 pulling it and the sliding auxiliary housing 35 away to a downward (as illustrated) position. In this position the lockout lever 30 is in a lower position and hence lockdog 31 allows spool 2 to rotate and the webbing is free to pay out. In this retractor, the retractor locking mechanism is so designed that movement of the lockdog 31 causes the mechanism to move to its locked position. In this way inadvertent locking of the lockdog 31 is prevented

When the seat is not secured the mechanism automatically locks the retractor and webbing cannot be pulled out from the spool. This alerts the passenger to the unlatched condition of the seat. Once the seat is again securely latched then the Bowden cable is retracted and the locking device operates to effectively disable the retractor. Thus the webbing cannot be pulled out to fasten the seat belt and this alerts the passenger that the seat is not secure.

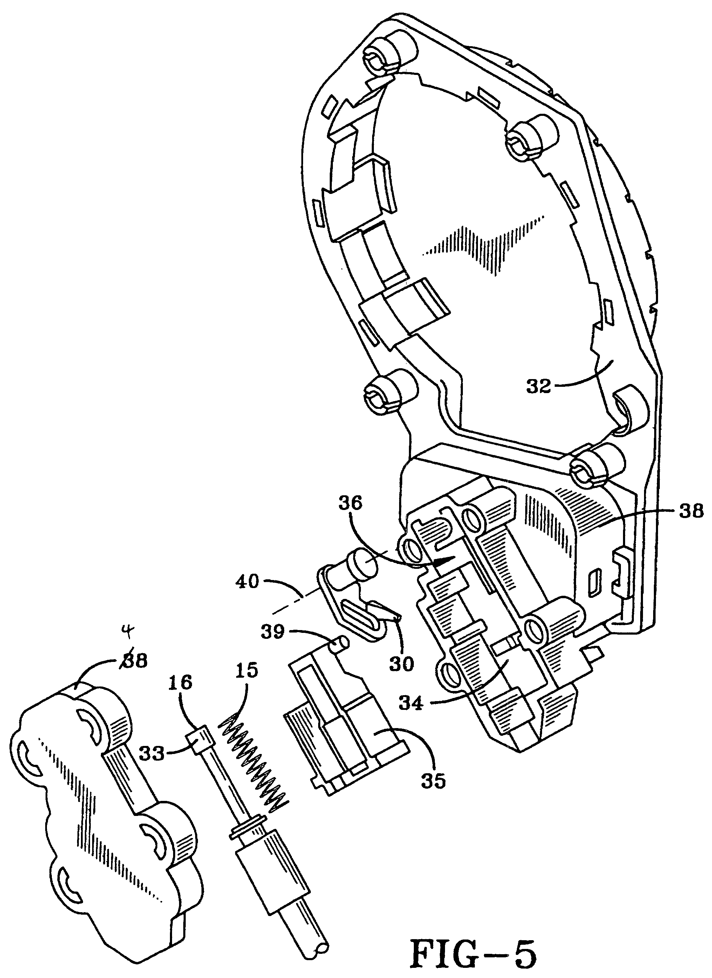

Figure 5 illustrates an embodiment of the present invention and shows a variation on the retractor of the illustratives examples of Figures 3 and 4 including a mechanism bush 32. This is a well known component of safety restraint retractors. It fits onto the side of the retractor to house the spool locking mechanism, i.e. the locking pawl 31 (not shown in Figure 5) and/or the vehicle sensor in housing recess 38 (facing away in the view of Figure 5). The mechanism bush 32 has a housing structure 34, for the override lockout components, including the pivoting lockout lever 30, biasing spring 15, Bowden cable 16 and sliding auxiliary housing 35. The sliding housing 35 contains the end 33 of cable 16 and the spring 15. A pair of pins 39 on the sides of the sliding housing 35 guide the sliding motion in slots in the housing structure 34. One of the pins 39 engages in the slot of the pivoting lockout lever 30 which pivots about axis 40. The housing structure 34 comprises an aperture the position of which is indicated at 36 through which the pivoting lockout lever 30 pivots to engage the retractor locking mechanism in the locking position by moving the ball. A cover 48 fits over the housing structure 34 to protect the components.

As can be seen, the arrangement allows the override lockout components to be assembled into the mechanism bush 32 as a complete module for testing in advance of the bush being attached to the retractor. All of the lockout components are assembled into the bush from the same side. This streamlines the assembly line and reduces manufacturing costs. Also, the parts may be assembled to the mechanism bush after completion of the full retractor assembly allowing flexible assembly process if so desired.

## Claims

1. A retractor for a vehicle safety restraint for use in a rear vehicle seat, the retractor comprising:
a rotatable spool (2), for storing seat belt webbing,
a retractor locking mechanism (31), for locking the spool (2) against rotation,
means (16) connecting a seat latch to the locking mechanism (31),
an override lockout lever (30),
a resilient biasing means (15), arranged to bias the lockout lever (30) into an engaging position in which the retractor locking mechanism (31) is engaged,
wherein the connecting means (16) is arranged, under the influence of the seat latch, to move the lever (30) between the engaging position in which the locking mechanism (31) engages, and an unengaged position in which the levers (30) is held clear of the locking mechanism (31) and the locking mechanism is disengaged, and **characterised in that** the retractor comprises a housing structure (34) wherein the override lockout lever (30), the resilient biasing means (15), and at least part of the connecting means (16) are located in said housing structure (34) to form a module which can be assembled into a mechanism bush part (32) as a complete module.

2. A retractor according to claim 1 wherein the lockout lever (30), the resilient biasing means (15) and said part of the connecting means (16) are arranged so that they can be assembled all from the same side into the mechanism bush part (32) which fits onto a side of the retractor.

3. A retractor according to any one of the preceding claims wherein the locking mechanism (31) is moved in phase with the lockout lever (30), so as to maintain its control of the angular position of the lockout lever (30).

4. A retractor according to any one of the preceding claims wherein the connecting means (16) comprises a cable which has one end connected to the seat latch and the other end connected to a spring biased slider acting on the lockout lever (30).

5. A retractor according to any one of the preceding claims further wherein the mechanism bush part (32) has an aperture (36) formed therethrough and the housing structure (34) surrounds the aperture (36) and wherein the lockout lever (30) and the resilient biasing means (15) are mounted in the housing structure (34) so that the lever (30) can pivot through the aperture (36).

6. A method of assembling a retractor for a vehicle safety restraint for use in a rear vehicle seat comprising first assembling, all from one side of the retractor, into a housing structure (34), an override lockout lever (30) movable into an engaging position locking the retractor and means connecting the seat latch to the retractor locking mechanism (31), and subsequently assembling the housing structure (34) to a retractor mechanism bush (32) and subsequently assembling the mechanism bush (32) to a retractor spool (2).

## Patentansprüche

1. Aufrollvorrichtung für eine Fahrzeugsicherheitsrückhaltevorrichtung zur Verwendung bei einem Fahrzeugrücksitz, wobei die Aufrollvorrichtung folgendes umfaßt:
eine drehbare Spule (2) zum Aufbewahren von Sicherheitsgurtband,
einen Aufrollvorrichtungsarretiermechanismus (31) zum Arretieren der Spule (2) gegen eine Drehung,
Mittel (16), die eine Sitzklinke mit dem Arretiermechanismus (31) verbinden,
einen Überlagerungssperrhebel (30),
ein elastisches Vorspannmittel (15), angeordnet, um den Sperrhebel (30) in eine Eingriffsposition vorzuspannen, in welcher der Aufrollvorrichtungsarretiermechanismus (31) in Eingriff ist,
bei der das Verbindungsmittel (16) angeordnet wird, um unter dem Einfluß der Sitzklinke den Hebel (30) zu bewegen, zwischen der Eingriffsposition, in welcher der Arretiermechanismus (31) eingreift, und einer ausgerückten Position, in welcher der Hebel (30) fern vom Arretiermechanismus (31) gehalten wird und der Arretiermechanismus außer Eingriff ist, und
**dadurch gekennzeichnet, daß** die Aufrollvorrichtung eine Gehäusestruktur (34) umfaßt, bei welcher der Überlagerungssperrhebel (30), das elastische Vorspannmittel (15) und wenigstens ein Teil der Verbindungsmittel (16) in der Gehäusestruktur (34) angeordnet werden, um ein Modul zu bilden, das als ein vollständiges Modul in einen Mechanikbuchsenteil (32) eingebaut werden kann.

2. Aufrollvorrichtung nach Anspruch 1, bei welcher der Sperrhebel (30), das elastische Vorspannmittel (15) und der Teil der Verbindungsmittel (16) so angeordnet werden, daß sie alle von der gleichen Seite in den Mechanikbuchsenteil (32) eingebaut werden können, der auf eine Seite der Aufrollvorrichtung paßt.

3. Aufrollvorrichtung nach einem der vorhergehenden Ansprüche, bei welcher der Arretiermechanismus (31) phasengleich mit dem Sperrhebel (30) bewegt wird, um so seine Kontrolle der Winkelposition des Sperrhebels (30) aufrechtzuerhalten.

4. Aufrollvorrichtung nach einem der vorhergehenden Ansprüche, bei der das Verbindungsmittel (16) ein Seil umfaßt, dessen eines Ende mit der Sitzklinke verbunden wird und dessen anderes Ende mit einem federvorgespannten Schieber verbunden wird, der auf den Sperrhebel (30) wirkt.

5. Aufrollvorrichtung nach einem der vorhergehenden Ansprüche, bei der außerdem der Mechanikbuchsenteil (32) eine durch denselben geformte Öffnung (36) hat und die Gehäusestruktur (34) die Öffnung (36) umschließt, und bei welcher der Sperrhebel (30) und das elastische Vorspannmittel (15) in der Gehäusestruktur (34) angebracht werden, so daß der Hebel (30) durch die Öffnung (36) schwenken kann.

6. Verfahren zum Zusammenbau einer Aufrollvorrichtung für eine Fahrzeugsicherheitsrückhaltevorrichtung zur Verwendung bei einem Fahrzeugrücksitz, die umfaßt, zuerst einen Überlagerungssperrhebel (30), der in eine Eingriffsposition bewegt werden kann, welche die Aufrollvorrichtung arretiert, und Mittel, welche die Sitzklinke mit dem Aufrollvorrichtungsarretierrnechanismus (31) verbinden, alle von einer Seite der Aufrollvorrichtung in eine Gehäusestruktur (34) einzubauen und anschließend die Gehäusestruktur (34) an eine Aufrollvorrichtungsmechanikbuchse (32) anzubauen und anschließend die Mechanikbuchse (32) an eine Aufrollspule (2) anzubauen.

## Revendications

1. Rétracteur pour une ceinture de sécurité d'un véhicule, destinée à être utilisée dans un siège arrière du véhicule, le rétracteur comprenant:
une bobine rotative (2) pour stocker la sangle de la ceinture de sécurité,
un mécanisme de verrouillage du rétracteur (31) pour verrouiller la bobine (2) contre une rotation,
un moyen (16) connectant un verrou de siège au mécanisme de verrouillage (31),
un levier de verrouillage prioritaire (30),
un moyen poussoir élastique (15) destiné à pousser le levier de verrouillage (30) dans une position d'engagement, dans laquelle le mécanisme de verrouillage du rétracteur (3 1 ) est engagé,
le moyen de connexion (16) étant destiné, sous l'influence du verrou du siège, à déplacer le levier (30) entre la position d'engagement, dans laquelle le mécanisme de verrouillage (31) est engagé, et une position non engagée, dans laquelle le levier (30) est dégagé du mécanisme de verrouillage (31), le mécanisme de verrouillage étant dégagé, **caractérisé en ce que** le rétracteur comprend une structure de boîtier (34) dans lequel sont agencés le levier de verrouillage prioritaire (30), le moyen poussoir élastique (15) et au moins une partie du moyen de connexion (16), qui sont agencés dans ladite structure de boîtier (34) pour former un module pouvant être assemblé en une partie de douille du mécanisme (32) sous forme d'un module complet.

2. Rétracteur selon la revendication 1, dans lequel le levier de verrouillage (30), le moyen poussoir élastique (15) et ladite partie du moyen de connexion (16) sont agencés de sorte à pouvoir être assemblés tous à partir du même côté dans la partie de douille du mécanisme (32), ajustée sur un côté du rétracteur.

3. Rétracteur selon l'une quelconque des revendications précédentes, dans lequel le mécanisme de verrouillage (31) est déplacé en phase avec le levier de verrouillage (30), de sorte à maintenir le contrôle correspondant de la position angulaire du levier de verrouillage (30).

4. Rétracteur selon l'une quelconque des revendications précédentes, dans lequel le moyen de connexion (16) comprend un câble comportant une extrémité connectée au verrou du siège, l'autre extrémité étant connectée à un coulisseau sollicité par ressort agissant sur le levier de verrouillage (30).

5. Rétracteur selon l'une quelconque des revendications précédentes, dans lequel la partie de douille du mécanisme (32) comporte une ouverture (36) la traversant, la structure de boîtier (34) entourant l'ouverture (36), le levier de verrouillage (20) et le moyen poussoir élastique (15) étant montés dans la structure de boîtier (34) de sorte que le levier (30) peut pivoter à travers l'ouverture (36).

6. Procédé d'assemblage d'un rétracteur pour une ceinture de sécurité d'un véhicule destinée à être utilisée dans un siège arrière du véhicule, comprenant l'étape d'un premier assemblage d'un levier de verrouillage prioritaire (30), pouvant être déplacé dans une position d'engagement verrouillant le rétracteur, et un moyen connectant le verrou du siège au mécanisme de verrouillage du rétracteur (31) dans une structure de boîtier (34), tous les éléments étant assemblés à partir d'un côté du rétracteur, et d'assemblage ultérieur de la structure de boîtier (34) à une douille du mécanisme de rétracteur (32) ainsi que d'assemblage ultérieur de la douille du mécanisme (32) à une bobine du rétracteur (2).
